Europäisches Patentamt

European Patent Office

Office européen des brevets

(19)

(11) Publication number: **0 432 815 A2**

# EUROPEAN PATENT APPLICATION

(12)

(21) Application number: **90202963.6**

(22) Date of filing: **09.11.90**

(51) Int. Cl.⁵ **A01B 49/06**, A01B 59/048

(30) Priority: **16.11.89 NL 8902832**

(43) Date of publication of application:
**19.06.91 Bulletin 91/25**

(84) Designated Contracting States:
**DE FR GB NL**

(71) Applicant: **C. van der Lely N.V.**
**Weverskade 10 P.O. Box 26**
**NL-3155 ZG Maasland(NL)**

(72) Inventor: **van der Lely, Cornelis**
**7 Brüschenrain**
**Zug(CH)**

(74) Representative: **Mulder, Herman et al**
**Octrooibureau Van der Lely N.V. Weverskade**
**10 P.O. Box 26**
**NL-3155 ZG Maasland(NL)**

(54) **An agricultural machine.**

(57) An agricultural machine comprises a plurality of interchangeable machine units for performing a variety of soil working operations, e.g. the combination of a plough (30) behind a tractor and a front-mounted rotary harrow (10), possibly with a seed drill (11), switchable from one side of the tractor (1) to the other, the combination of a rotary harrow (10), possibly with a seed drill (11), behind the tractor (1) and a front-mounted rotary harrow (10), possibly with a seed drill (11), switchable from one side of the tractor (1) to the other, the combination of a front-mounted plough (30) and a rear-mounted rotary harrow (10), possibly with a seed drill (11), switchable from one side of the tractor (10) to a position right therebehind, etc.

Fig. 1

EP 0 432 815 A2

## AN AGRICULTURAL MACHINE

The invention relates to an agricultural machine comprising a plurality of machine units capable of performing a variety of soil working operations.

Using an agricultural machine of this type, it may be possible, during ploughing, to simultaneously prepare a seed bed and to sow same. In this situation, the machine units involved are connected to a tractor always in the same manner. Therefore, a universal use of the agricultural machine is not possible.

The invention has for its object to provide a system, by means of which a large number of soil working operations can be performed, and wherein the machine units are arranged relative to each other and relative to a tractor so as to be operable in an optimum manner.

According to the invention, this is achieved in that the machine comprises at least a tractor, a plough, a power-driven harrow and a seed drill, and in that the units are arranged such in the machine that they are interchangeable. Thus, it is possible to mount or interchange one or more of the units at one's option and, in addition, to arrange the units such relative to the tractor that, during operation, a maximum steerability and a maximum view on the work are obtained, while, during transport, the load is distributed such that an optimum handling of the tractor and an optimally uniform loading thereof are obtained.

A further feature of the invention relates to an agricultural machine of the above-defined type, which machine comprises a tractor, a front-mounted rotary harrow and a rear-mounted rotary harrow, which rotary harrows together have a working width that is wider than a tractor track, while there are provided means for arranging at least one rotary harrow approximately in the longitudinal centre line of the tractor, during transport. Using this proposed construction and arrangement of the rotary harrows, it will be possible to obtain a large working width for the strip of soil to be worked, while the assembly can be arranged advantageously relative to the tractor, during transport.

A further feature of the invention relates to an agricultural machine of the above-defined type, which machine comprises a tractor, a front-mounted reversible plough and a rear-mounted rotary harrow. Using this provision, there is obtained a combination which, during operation, provides an excellent view of the action of the plough and, in addition, renders it possible to prepare simultaneously a seed bed for direct or later sowing.

For a better understanding of the present invention and to shod how the same may be carried into effect, reference will now be made, by way of example, to the accompanying drawings of some embodiments of the agricultural machine, in which drawings:

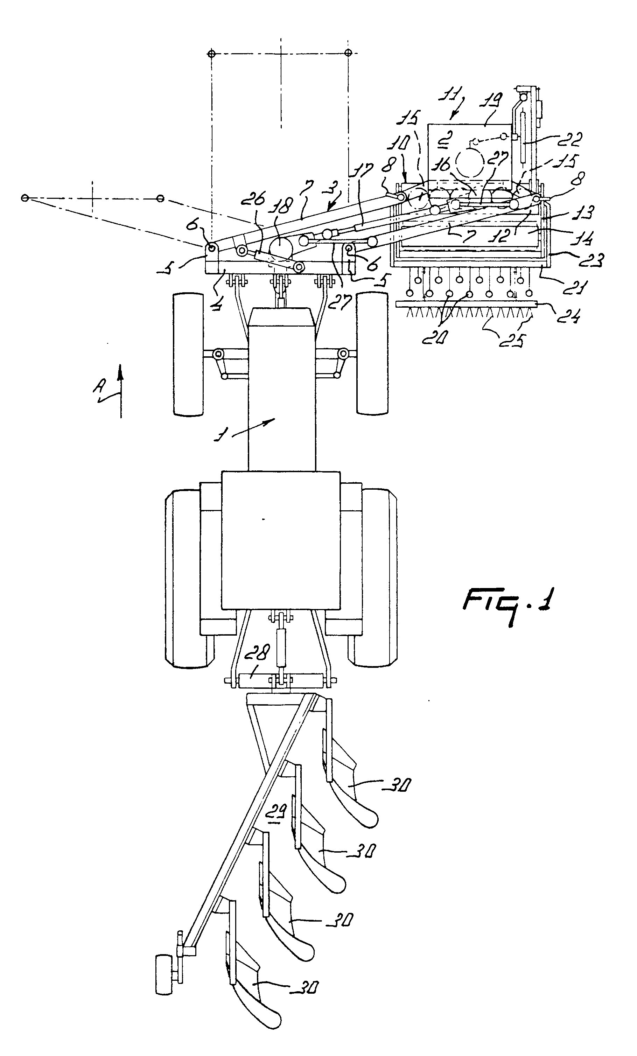

Figure 1 is a plan view of an embodiment of an agricultural machine in accordance with the invention, in which embodiment to the front side of the tractor there is connected a pivotal unit consisting of a rotary harrow and a seed drill and to the rear side thereof a unit formed by a reversible plough;

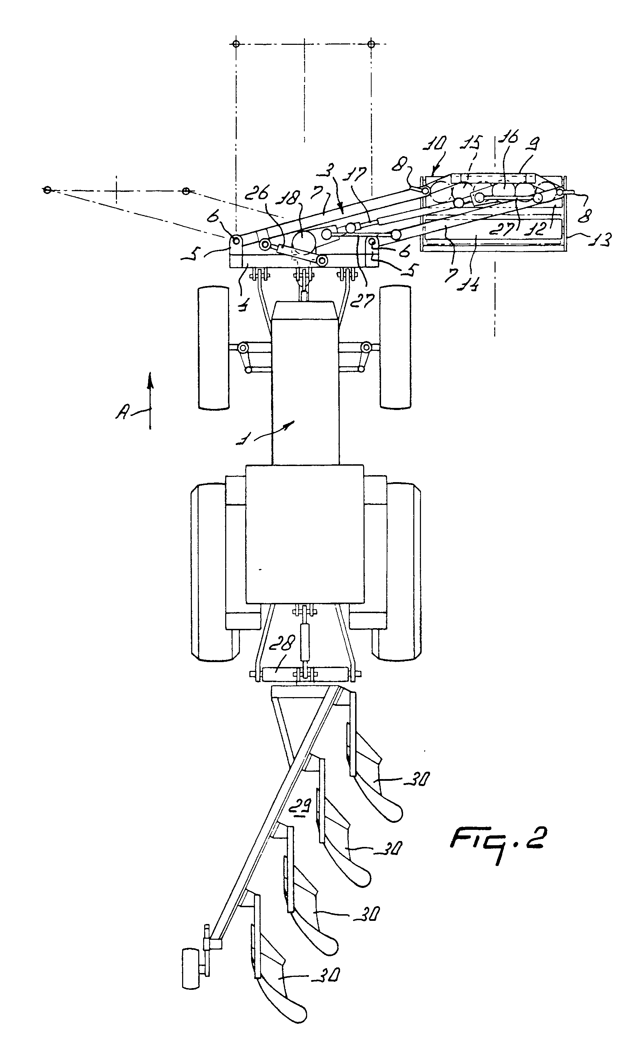

Figure 2 shows an arrangement of an agricultural machine according to the invention, in which arrangement to the front side of the tractor there is connected a pivotal unit constituted by a rotary harrow and to the rear side thereof a unit constituted by a reversible plough;

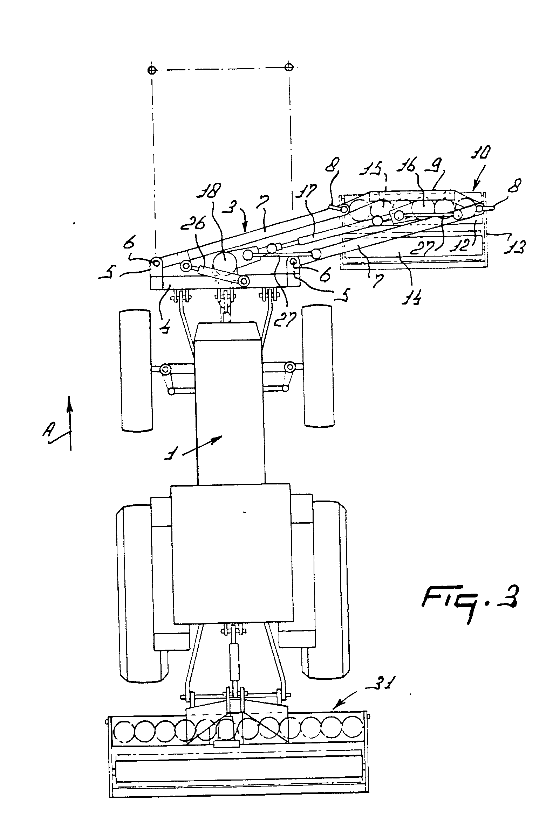

Figure 3 shows an embodiment of an agricultural machine according to the invention, in which embodiment to the front side of the tractor there is connected pivotably a unit constituted by a rotary harrow, which unit, during operation, can co-operate with a rear-mounted unit constituted by a rotary harrow for working a continuous strip of soil;

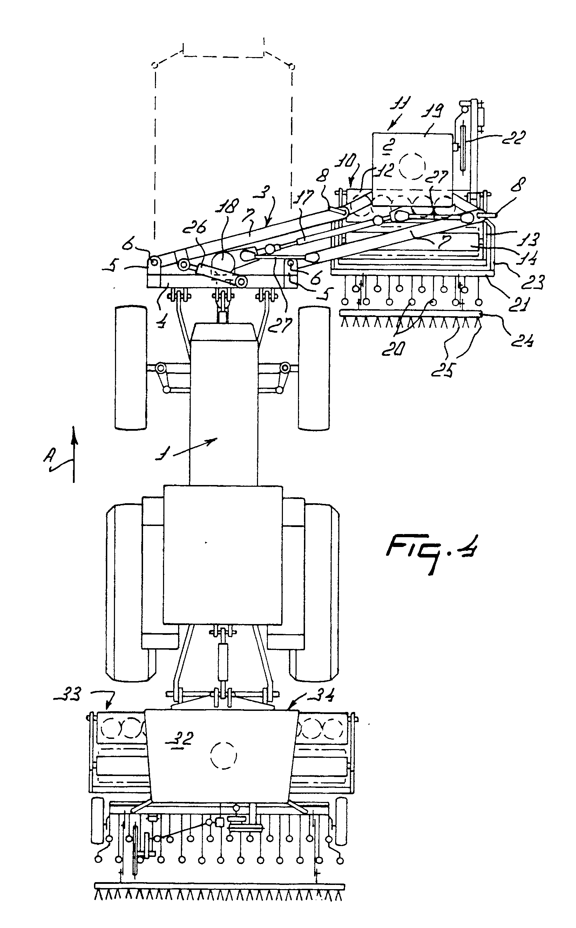

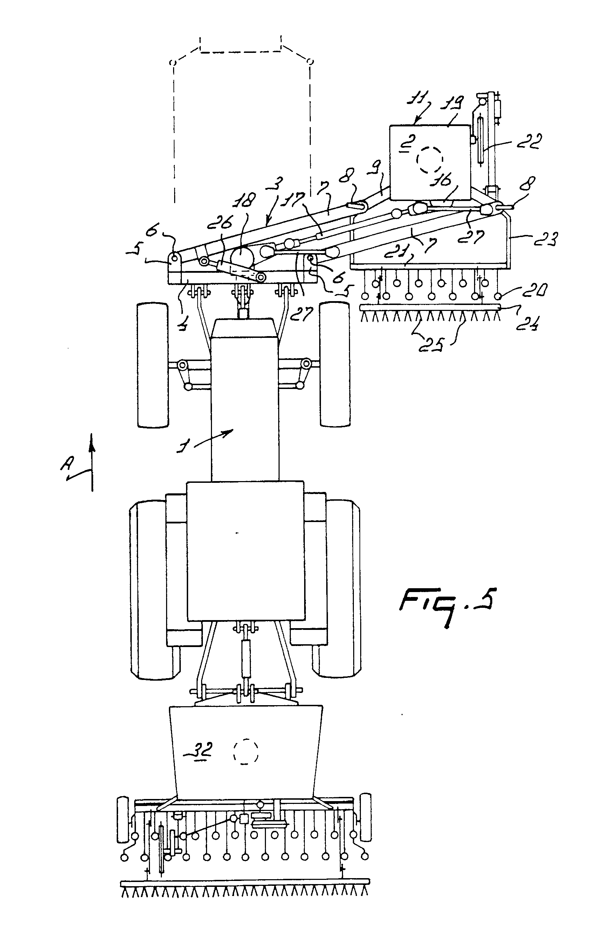

Figure 4 shows an embodiment of an agricultural machine in accordance with the invention, in which embodiment to the front side of the tractor there is connected a pivotal unit consisting of a combination of a rotary harrow and a seed drill and to the rear side thereof also a unit consisting of a combination of a rotary harrow and a seed drill, the arrangement being such thatl during operation, the two units together work a continuous strip of soil;

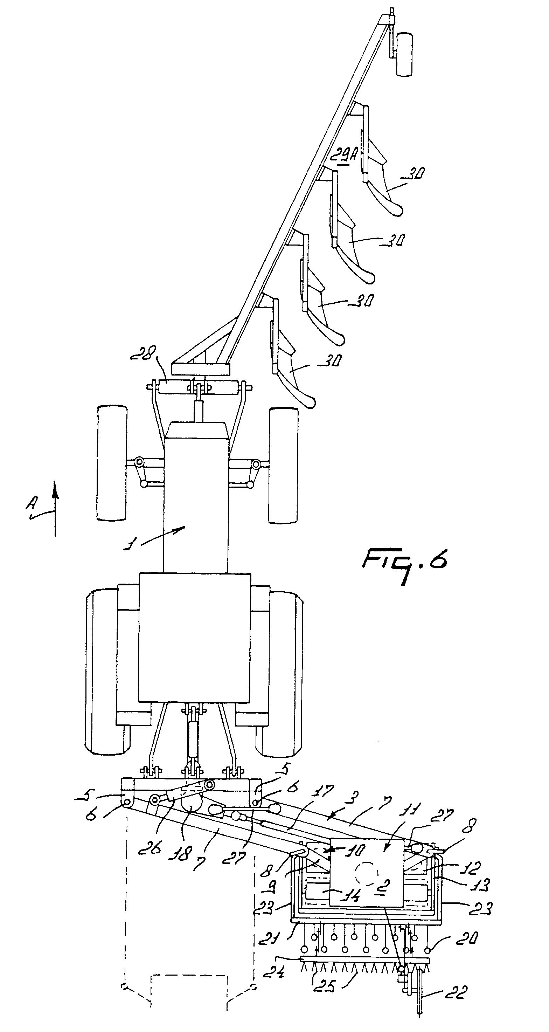

Figure 5 shows an embodiment of an agricultural machine in accordance with the invention, in which embodiment to the front side of the tractor there is connected a pivotal unit formed by a pneumatic seed drill and to the rear side thereof also a unit formed by a pneumatic seed drill, the arrangement being such that a continuous strip of soil can be sown;

Figure 6 shows an embodiment of an agricultural machine in accordance with the invention, in which embodiment to the front side of the tractor there is connected a unit formed by a reversible plough and to the rear side thereof there is connected pivotably a unit consisting of a combination of a rotary harrow and a seed drill, the arrangement being such that, during operation, the strip of soil worked by the plough can be turned into a seed bed and be sown simultaneously.

The implement shown in the drawings relates to an agricultural machine which, in addition to a tractor 1, comprises various machine units connected to the front side and to the rear side, respectively, of the tractor 1, by means of which units a variety of soil working operations can be performed.

As is shown in Figure 1, to the front side of the tractor 1 there is connected a machine unit 2 including a frame 3. The frame 3 comprises a frame portion 4 which extends transversely to the direction of operative travel A and is provided with coupling means for coupling to the three-point lifting hitch at front side of the tractor 1. At each of its ends, the frame portion 4 is provided with lugs 5, to which are arranged pivotably the parallel beams 7 of a parallelogram construction by means of upwardly extending, preferably vertical, shafts 6. The other ends of the beams 7 are connected pivotably by means of removable, at least substantially vertical shafts 8 to the ends of a frame portion 9 which, seen in plan view, is in the form of a bracket and whose midway point is located in front of its ends which are connected pivotably to the beams 7, the frame portion 9 being shown in further detail in Figure 2. A rotary harrow 10 and a pneumatic seed drill 11 are arranged interchangeably by means of the shafts 8. The rotary harrow 10 and the seed drill 11 are shown schematically. The rotary harrow 10 comprises six soil working members which are arranged in a side-by-side relationship in a row extending transversely to the direction of operative travel A and which are capable of rotating about at least substantially vertical shafts. The soil working members are supported in a box-like frame portion 12 which extends transversely to the direction of operative travel A and accommodates the drive for the soil working members. Near its ends, the frame portion 12 is fitted to the bracket-shaped frame portion 9 via the detachable shafts 8. By means of arms 13 which are provided pivotably at the ends of the frame portion 12 there is fitted behind the soil working members a roller 14 which is adjustable in height and, during operation, determines the working depth of the soil working members. The drive inside the box-like frame portion 12 is formed by meshing spur gear wheels 15. Near the centre of the row, one of the shafts of a soil working member is extended upwardly and by means of the extension reaches into a gear box 16 provided on the frame portion 12. Inside the gear box there is accommodated a bevel gear transmission with a horizontal shaft which projects outside the gear box and is bearing-supported in a pivotal portion located at the upper side of the gear box. Via an intermediate shaft 17, which extends at least substantially halfway between and parallel to the beams 7 of the parallelogram construction, the relevant shaft is connected to a horizontal shaft located in a pivotal upper part of a gear box 18 and forming part of a bevel gear transmission. The gear box 18 is provided on the frame portion 4 which is to be coupled to the lifting hitch of the tractor 1. The gear box 18 includes a rearwardly extending shaft which projects to beyond the gear box and, via a (non-shown) intermediate shaft, can be coupled to the power take-off shaft at the front side of the tractor. By means of the easily detachable shafts 8 the seed drill 11 is also fitted detachably to the bracket-shaped frame portion 9. The seed drill includes a hopper 19 having a distributing mechanism, to which are connected flexible tubes which extend between the beams 7 and the upper side of the rotary harrow 10 to seed coulters 20. The seed coulters are attached to a frame 21. Below the hopper 19 there are a dosing mechanism which can be driven from a stepper wheel 22 and a fan which is driven from the intermediate shaft 17. By means of pivotal arms 23 there is fitted to the frame 21 of the seed drill 11 a carrier 24, which extends transversely to the direction of operative travel A and is provided with spring-loaded harrow tines 25. Between the frame portion 4 and the, taken in the direction of operative travel A, left-hand beam 7 of the parallelogram construction there is arranged a hydraulic adjusting cylinder 26 which is connected in a non-shown manner to the hydraulic circuit of the tractor. Using the adjusting cylinder 26, the parallelogram construction cum machine unit 2 attached thereto can be adjusted to positions represented by broken lines in Figure 1. Thus, the assembly can be adjusted to a working position wherein the machine unit 2 is located at the other side of the tractor 1. During transport, the machine unit 2 can be adjusted to a position wherein it is located centrally in front of the tractor, so that its longitudinal centre line at least substantially coincides with that of the tractor 1. Each of the pivotal parts of the gear boxes 16 and 18 is connected via a steering rod 27 to a beam 7 of the parallelogram construction, the arrangement being such that, after the assembly has been lifted by means of the lifting hitch, on pivoting of the parallelogram construction and the unit to the other working position, the driving connection via the shaft 17 is maintained.

At its rear side, the tractor 1 is also provided with a three-point lifting hitch, to which is connected a frame portion 28 which forms part of a machine unit 29 designed as a reversible plough which, in this embodiment, is provided with four plough bodies 30 which, in the working position shown in Figure 1, move the earth towards the right. The working width of the front-mounted unit is 1.5 metres, while the reversible plough 29 has the same working width. Using the agricultural machine as illustrated in Figure 1 and provided with the machine units 2 and 29 shown, it is possible, when moving the tractor in a direction indicated by the arrow A, to obtain simultaneously with the ploughing operation in one operating run a preparation of a seed bed and a sowing of this seed bed. Having reached the end of the field, the reversible plough 29 can be lifted, whereafter in a known per se manner left-acting plough bodies automatically arrive in an operating position, so that a return operating run can be performed. In addition, after having lifted the combination of rotary harrow 10 and seed drill 11, it is possible to adjust the assembly by means of the hydraulic adjusting cylinder 26 to the operating position indicated by broken lines in Figure 1. When the machine is to be transported, the rear-mounted plough 29 can be lifted and, after having lifted the rotary harrow/seed drill combination, the assembly can be adjusted to the transport position indicated by means of broken lines and wherein the combination of rotary harrow 10 and seed drill 11 is located in front of the tractor, which furnishes an appropriate weight distribution.

The use of a pneumatic seed drill renders it possible for the tubes connected to the seed coulters to be passed under the parallelogram construction, so that an adjustment thereof is not hampered with. The shafts 8, which are used for mounting the rotary harrow 10 and the seed drill, also serve as pivot points of the parallelogram construction.

Figure 2 shows an agricultural machine of the invention in which, the seed drill having been removed, there is mounted at the front side of the tractor 1 only the rotary harrow 10 which by means of the parallelogram construction can be adjusted, in the same manner as has been described in the foregoing for the rotary harrow/seed drill combination, to the working position or the transport position, respectively, as represented by the broken lines in Figure 2. At the rear side of the tractor 1 there is mounted the same machine unit 29 constituted by the reversible plough. Using this combination, it is possible to prepare, during the ploughing operation, in the same operating run also a seed bed which, optionally, may be sown at a later instant.

Figure 3 shows an agricultural machine having mounted at the front side of the tractor in the same manner as shown in Figure 2 the rotary harrow 10, which in this case can co-operate with a rotary harrow 31 mounted at the rear side thereof. The working width of the rear-mounted rotary harrow is 4.5 metres, so that together with the rotary harrow 10 at the front side having a working width of 1.5 metres there can be worked a strip of soil having a total width of 6 metres. The combination shown in Figure 3 can be used if one wants to prepare in a fast manner a seed bed for optionally later sowing on land which has already been ploughed (e.g. in a winter furrow).

Figure 4 shows an agricultural machine of the invention in which, in the same manner as in Figure 1, there is mounted at the front side of a tractor 1 a combination of a rotary harrow 10 and a seed drill 11. At the rear side of the tractor 1 there is coupled a machine unit 32 formed by a combination of a rotary harrow 33 and a pneumatic seed drill 34, which combination has a working width of 4.5 metres. Using this agricultural machine, it is possible to work by means of the said machine units a strip of soil having a width of 6 metres and to sow same simultaneously. During transport, the front-mounted seed drill/rotary harrow combination can be adjusted, in the same manner as in the preceding embodiments, to a central position in front of the tractor, whereby the longitudinal centre line of the combination coincides at least substantially with that of the tractor.

Figure 5 shows an agricultural machine of the invention comprising at the front side only the pneumatic seed drill 11, the front-mounted rotary harrow 10 having been removed. Compared with the embodiment shown in Figure 4, the rear-mounted rotary harrow 33 has been removed and the pneumatic seed drill 34 of the machine unit 32 has been attached directly to the tractor 1. By means of this combination it is possible to sow a strip of 6 metres of a seed bed already prepared (e.g. using the combination shown in Figure 3). In this case, the seed drill is supported by a ground wheel (not shown in further detail) which may be attached to the frame of the seed drill or to the parallelogram construction.

Figure 6 shows an agricultural machine of the invention having coupled to the front side of the tractor a machine unit 29A formed by a reversible plough. In the same manner as in the preceding embodiments, there is coupled to the rear side of the tractor 1 by means of a parallelogram construction a machine unit 2, which is a combination of a rotary harrow 10 and a pneumatic seed drill 11. In this embodiment, by means of the parallelogram construction the combination of the rotary harrow 10 and the pneumatic seed drill 11 can be adjusted to a second working position wherein the assembly is located at the other side of the tractor 1, while, furthermore, the assembly can assume a transport position wherein its longitudinal centre line substantially coincides with that of the tractor 1. Using the embodiment shown in Figure 6, it is possible for a strip of soil having a width of 1.5 metres to be ploughed, worked and sown in one operating run. In the return run, in which the plough shares 30 of the plough move the earth towards the left, the combination of rotary harrow 10 and seed drill 11 can be adjusted to the working position indicated by means of broken lines. Using this arrangement of the machine units, it is also possible to remove the seed drill 11.

The invention relates to a system, by means of which in the first place it is possible to plough a field over a width of approximately 3 metres, to prepare a seed bed and to sow the prepared seed bed in one operating run (Figure 1). However, when sowing is to be effected at a later instant, then use can be made of the agricultural machine shown in Figure 2 and comprising the front-mounted rotary harrow 10 and the rear-mounted reversible plough 29. In this case, too, it is possible to work in one operating run a strip of soil having a width of 3 metres. When the field has been ploughed already, a strip of soil having a' width of 6 metres can be made suitable for sowing in one operating run by means of the combination shown in Figure 3. When the field had been ploughed already in the autumn, then in spring the combination shown in Figure 4 can be used, by means of which combination a six metres wide strip of soil can be worked using the front-mounted and rear-mounted rotary harrows, whereafter this strip can be sown using the front-mounted and rear-mounted pneumatic seed drills. In the combination shown in Figure 5, a six metres wide strip of soil can be sown on a seed bed which was prepared previously by means of e.g. the combination shown in Figure 3. In the combination shown in Figure 6 there can be used a tractor which need not have a power take-off shaft at its front side. In addition, one has a very good view on the plough action, so that a high degree of accuracy can be obtained.

The invention is not limited to the features described in the foregoing but also relates to all the details shown in the drawings, whether they have been described or not.

## Claims

1. An agricultural machine comprising a plurality of machine units capable of performing a variety of soil working operations, characterized in that the machine comprises at least a tractor (1), a plough (29, 29A), a power-driven harrow (10, 31, 33) and a seed drill (11, 34), and in that the units are arranged such in the machine that they are interchangeable.

2. An agricultural machine as claimed in claim 1, characterized in that the machine comprises a front-mounted machine unit and a rear-mounted machine unit, constituted by rotary harrows (10, 31, 33), which rotary harrows together have a working width that is wider than the tractor track, while there are provided means for arranging at least one rotary harrow (10) at least substantially in the longitudinal centre line of the tractor (1), during transport.

3. An agricultural machine comprising a plurality of machine units capable of performing a variety of soil working operations, characterized in that the machine comprises a tractor (1), a front-mounted rotary harrow (10) and a rear-mounted rotary harrow (31, 33), which rotary harrows together have a working width that is wider than the tractor track, while there are provided means for arranging at least one rotary harrow (10) approximately in the longitudinal centre line of the tractor, during transport.

4. An agricultural machine as claimed in any one of the preceding claims, characterized in that at front side of the tractor (1) there is arranged a machine unit constituted by a reversible plough (29A) and at the rear side thereof a machine unit constituted by a rotary harrow (10).

5. An agricultural machine comprising a plurality of machine units capable of performing a variety of soil working operations, characterized in that the machine comprises a tractor (1), a reversible plough (29A) arranged at the front side of the tractor (1) and a rotary harrow (10) arranged at the rear side thereof.

6. An agricultural machine as claimed in claim 1 or 2, characterized in that the machine comprises machine units formed by a rotary harrow (10), a seed drill (11) and a plough (29, 29A), each of which having a working width of approximately 1.5 metres.

7. An agricultural machine as claimed in claim 3, characterized in that at the front side of the tractor (1) there is arranged a machine unit constituted by a rotary harrow (10) having a working width of 1.5 metres and at the rear side thereof a machine unit constituted by a rotary harrow (31, 33) having a working width of 3 metres.

8. An agricultural machine as claimed in any one of claims 1 to 4, characterized in that at the front side of the tractor (1) there is arranged a machine unit formed by a combination of a rotary harrow (10) and a seed drill (11) having a working width of 1.5 metres and at the rear side thereof a machine unit formed by a combination of a rotary harrow (33) and a seed drill (34) having a working width of 3 metres.

9. An agricultural machine as claimed in any one of claims 1 to 4, characterized in that at the front side of the tractor (1) there is arranged a machine unit constituted by a seed drill (11) having a working width of 1.5 metres and at the rear side thereof a machine unit constituted by a seed drill (34) having a working width of 3 metres.

10. An agricultural machine as claimed in any one of the preceding claims, characterized in that for a machine unit there is provided a pivotal parallelogram construction, to which the machine unit formed by a rotary harrow (10) and/or a seed drill (11) is arranged detachably.

11. An agricultural machine as claimed in claim 10, characterized in that the parallelogram construction can be coupled to the three-point lifting hitch of the tractor (1).

12. An agricultural machine as claimed in claim 10 or 11, characterized in that there are provided shafts (8) for the detachable connection, which shafts (8) at the same time constitute pivot points for the parallelogram construction.

13. An agricultural machine as claimed in claim 12, characterized in that the parallelogram construction includes a frame portion (9), to which the seed drill (11) and/or the rotary harrow (10) can be attached by means of the detachable shafts (8).

14. An agricultural machine as claimed in any one of claims 10 to 13, characterized in that there is provided a drive for the rotary harrow (10) and the pneumatic seed drill (11), which drive is located within the parallelogram construction.

15. An agricultural machine as claimed in claim 14, characterized in that the drive includes an intermediate shaft (17) which connects the pivotal portion of the gear box (16) located near the machine unit with that of the gear box (18) located on a frame portion (4) to be coupled to the tractor (1).

16. An agricultural machine as claimed in any one of claims 10 to 15, characterized in that a machine unit is adjustable to two working positions located beside the tractor (1) by means of the parallelogram construction as well as to a transport position wherein the longitudinal centre line of the machine unit coincides at least substantially with that of the tractor (1).

17. An agricultural machine as claimed in any one of claims 10 to 16, characterized in that the parallelogram construction is at a higher position than the rotary harrow (10), and in that the pneumatic seed drill (11) includes feed tubes for the seed coulters (20), the said feed tubes being located between the parallelogram construction and the upper side of the rotary harrow (10).

18. An agricultural machine as claimed in any one of claims 10 to 17, characterized in that the seed drill (11) includes a hopper (19) which is arranged at the upper side of the parallelogram construction.

FIG. 1

FIG.2

FIG.3

FIG.4

FIG.5

*FIG.6*